# EUROPEAN PATENT APPLICATION

(11) **EP 0 887 242 A2**
(43) Date of publication of application: **30.12.1998**
(21) Application number: 98111606.4
(22) Date of filing: 24.06.1998
(51) Int. Cl.: B60T 8/36, F16K 27/00

(54) **Brake fluid pressure control apparatus**

(30) Priority: 25.06.1997 JP 168473/97
(71) Applicant: SUMITOMO ELECTRIC INDUSTRIES, LTD., Osaka-shi, Osaka (JP)
(72) Inventor: Aoki, Katsunori, 1-1, Koyakita 1-chome, Itami-shi, Hyogo (JP); Kohno, Teruhisa, 1-1, Koyakita 1-chome, Itami-shi, Hyogo (JP); Masuda, Shigeki, 1-1, Koyakita 1-chome, Itami-shi, Hyogo (JP)
(74) Representative: Füchsle, Klaus, Dipl.-Ing.

(57) **Abstract**

In an antilock brake fluid control apparatus, passages (98a) through (98k) formed in a housing block (40), and passages constituting a part of the main passage which communicates an inlet valve (31A) with a discharge valve (35A) and is connected to wheel cylinders, are arranged between a first side face (40a) and a standard plane (F). An axis (L) of a plunger pump (35A) is arranged on the standard plane (F). The standard plane (F) is parallel to the first surface (40a) on which an electric motor (37) is provided.

## Description

The present invention relates to a brake fluid control apparatus for vehicles such as an automobile.

### BACK GROUND OF THE INVENTION

Such kind of brake fluid control apparatus is interposed in a passage which communicates a master cylinder with wheel cylinders and controls wheel cylinder pressure according to the skid condition of wheels.

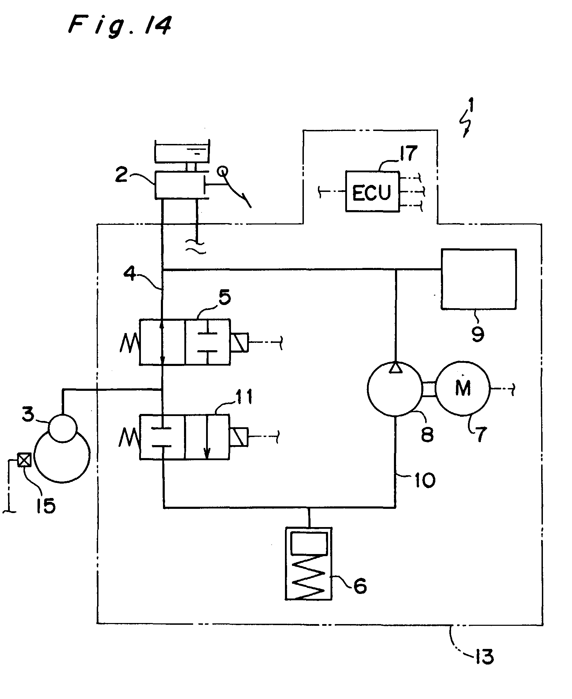

General constitution of an antilock brake system provided with such a brake fluid pressure control apparatus 1 is shown in Fig. 14. A normally open inlet valve 5 is interposed in a main passage 4 which communicates a master cylinder 2 with a wheel cylinder 3. A return passage 10 branching from the main passage 4 at the wheel cylinder side with respect to the inlet valve 5 and returning to the master cylinder 2 through a reservoir 6, a plunger pump 8 actuated by an electric motor 7 and a silencer 9 is provided. A normally close discharge valve 11 is interposed in the return passage 10. The inlet valve 5, the discharge valve 11, the reservoir 6, the electric motor 7, the plunger pump 8 and the silencer 9 are provided in a housing block 13. Passages which constitute the main passage 4 and the return passage 10 are bored in the housing block 13. Further, the brake fluid pressure control apparatus 1 is provided with an electronic control substrate 17 which controls the inlet valve 5 and the discharge valve 11 on the basis of signals inputted from a wheel speed sensor 15 and so on.

The brake fluid pressure apparatus 1 is limited as to the space for mounting it on a vehicle. Thus, various attempt for decreasing the size of the brake fluid pressure apparatus 1 have been made.

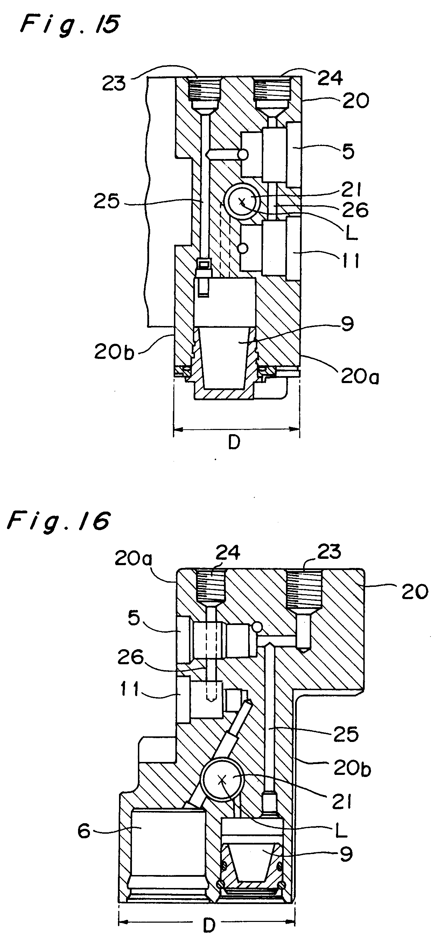

For example, as shown in Fig. 15, in a brake fluid pressure control apparatus disclosed in Japanese National Publication No. 8-502007 which is the translated version of PCT application PCT/EP93/02543, a plunger pump 21 is provided between an inlet valve 5 and a discharge valve 11 mounted on one side face of a housing block 20 so that an axis "L" thereof is orthogonal to the mounting direction of the inlet valve 5 and the discharge valve 11. A passage 25 for communicating a silencer 9 with an inlet 23 connected to a master cylinder not shown is formed between the axis "L" of the plunger and the side face 20b of the housing block 20 so as to extend in vertical direction in the figure. The passage 25 constitutes a part of the return passage 10 in Fig. 14. Owing to such arrangement, the width "D" is decreased comparing with the case that the passage 25 is formed between the axis "L" of the plunger 21 and the one side face 20a of the housing block 20.

Similarly, as shown in Fig. 16, in a brake fluid pressure control apparatus disclosed in Japanese Patent Laid-open No. 8-80827, a passage 25 communicating a silencer 9 with an inlet 23 is formed on the side of a side face 20b of the housing block 20 opposite a side face 20a on which the inlet valve 5 and discharge valve 11 are mounted with respect to the axis "L" of a plunger 21, thereby reducing width "D" of the housing block 20.

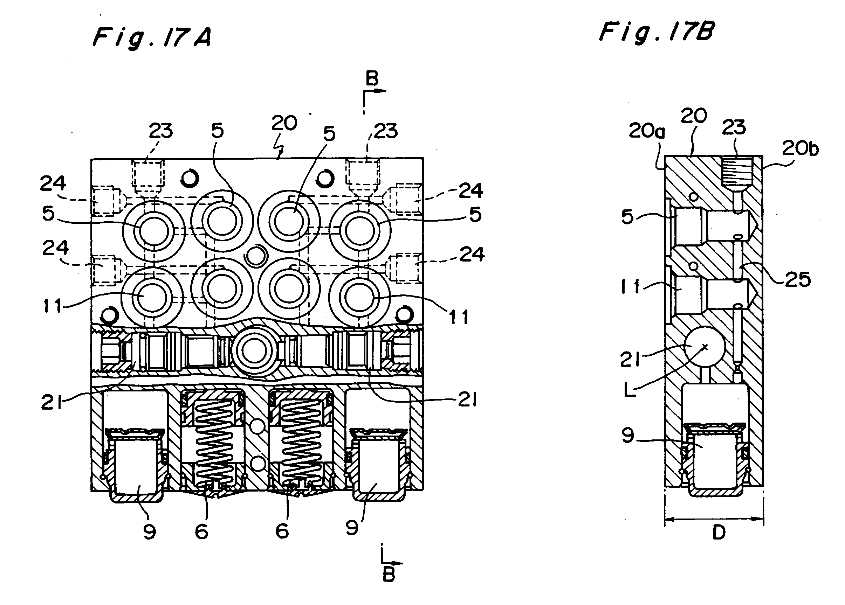

Further, as shown in Figs. 17A and 17B, in a brake fluid pressure control apparatus disclosed in U.S.P. No. 54,60,438, the plunger pump 21 and the passage 25 communicating the silencer 9 with the inlet 23 are arranged in same positional relation as that of Figs. 15 and 16, thereby reducing the width "D" of the housing block 20.

However, in conventional brake fluid pressure control apparatuses shown in Figs. 15 through 17, positional relation between the passage corresponding to the main passage 4 in Fig. 14 and the plunger pump 8 is not set so as to decrease the size of the brake fluid pressure control apparatus.

For example, in the apparatuses shown in Figs. 15 and 16, the passage 26, which is communicated with the outlet 24 connected to the wheel cylinder not shown, constitutes a part of the main passage 4 from the mater cylinder 2 to the inlet valve 5 and a part of the return passage 10 from the wheel cylinder 3 to the discharge valve 11 in Fig. 14. The passage 26 is provided between the axis "L" of the plunger pump 21 and the side face 20a on which the inlet valve 5 and the discharge valve 11 are provide. In such a constitution, the plunger pump 21 should be arranged on the side of the other side face 20b in order to make a space for arranging the passage 26, thereby increasing the width "D".

Similarly, in the apparatus shown in Figs. 17A and 17B, since the outlet 24 and the inlet 23 are provided on different side portions, arrangement of passages for communicating the outlet 24 and the inlet 23 with the master cylinder and the wheel cylinder is complex, thereby increasing the entire size of the whole apparatus.

### SUMMARY OF THE INVENTION

Accordingly, with a view to obviating the above described drawbacks of the conventional brake fluid pressure control apparatus, an object of the present invention is to decrease the size of the brake fluid control apparatus.

In order to accomplish this object of the present invention, the present invention provides a brake fluid pressure control apparatus interposed in a passage which communicates a master cylinder with wheel cylinders, the brake fluid pressure control apparatus comprising: a main passage communicating the master cylinder with the wheel cylinder; a normally open inlet valve actuated by electromagnetic force to communicate and cut off the main passage; a return passage branching from the main passage at the wheel cylinder side with respect to the inlet valve and returning to the main passage at the master cylinder side with respect to the inlet valve; a normaly close discharge valve actuated by electromagnetic force to communicate and cut off the return passage; a plunger pump sending brake working fluid discharged from the wheel cylinder to the main passage through the return passage; an electric motor for actuating the plunger pump; and a housing block provided with the inlet valve, the discharge valve, the plunger pump and the electric motor and formed with the main passage and the return passage; wherein the electric motor is provided on a first side face of the housing block, wherein the plunger pump is arranged so as to be orthogonal to a rotation shaft of the electric motor, and so that an axis thereof is arranged on a standard plane which is parallel to the first side face, wherein the inlet valve and the discharge valve are provided on a second side face opposite the first side face so that axes thereof are parallel to the rotation shaft of the electric motor, and wherein passages which constitute a part of the main passage communicating the inlet valve with the discharge valve and connected to the wheel cylinder are arranged between the first side face and to the standard plane.

In the brake fluid pressure control apparatus of the present invention having above described constitution, among the passages formed in the housing block, the passage, which communicates the inlet valve in the main passage with the discharge valve and is connected to the wheel cylinder side, is formed between the side face on which the electric motor is mounted and the standard plane. Owing to such arrangement of the passages, a width between the first side face of the housing block on which the electric motor is mounted and the second side face thereof on which the inlet valves and the discharge valves are mounted is decreased.

Preferably, a silencer interposed in the return passage and reducing pulsation of the working fluid discharged from the plunger pump is provided in the housing block, and a passage which communicates the silencer with the main passage at the master cylinder side with respect to the inlet valve is arranged between the first side face side and the standard plane.

Owing to such constitution, the width of the housing can be further decreased.

The brake fluid pressure control apparatus can further comprise an electronic control substrate having a micro computer and outputting drive signals to the inlet valve, the discharge valve and the electric motor, wherein one ends of the inlet valve and the discharge valve are arranged inside the housing block and the other ends of them are projecting from the second side face of the housing block, and wherein the electronic control substrate is provided on the side of the other ends of the inlet valve and the discharge valve.

Owing to that the electronic control substrate is arranged at such position, the size of the brake fluid control apparatus is decreased.

Preferably, the one end of the inlet valve is inserted into a valve accommodate bore formed on the second face, and master cylinder pressure introduced into the inlet valve in orthogonal direction to the axis thereof is discharged from the one end thereof to the wheel cylinder.

Preferably, the one end of the discharge valve is inserted into a valve accommodate bore formed on the second side face and master cylinder pressure introduced into the inlet valve at the one end thereof is discharged to the return passage in orthogonal direction to the axis thereof.

### BRIEF DESCRIPTION OF THE DRAWINGS

Other objects and features of the present invention will become clear from the following detail description with reference to the accompanying drawings in which:
Fig. 1 is a central sectional view of the brake fluid control apparatus according to the first embodiment;
Fig. 2 is a sectional view taken along the line II-II of Fig. 1;
Fig. 3 is a sectional view taken along the line III-III of Fig. 1;
Fig. 4 is a sectional view taken along the line IV-IV of Fig. 1;
Fig. 5 is a fluid pressure circuit diagram of the antilock brake system provided with the brake fluid pressure control apparatus according to the first embodiment;
Fig. 6 is a sectional partial view showing another mounting construction of the sleeve;
Fig. 7 is a sectional partial view showing another mounting construction of the sleeve;
Fig. 8 is a sectional view showing a modification of the first embodiment;
Fig. 9 is a central sectional view of the brake fluid control apparatus according to the second embodiment;
Fig. 10 is a sectional view taken along the line X-X of Fig. 9;
Fig. 11 is a sectional view taken along the line XI-XI of Fig. 9;
Fig. 12 is a sectional view taken along the line XII-XII of Fig. 9;
Fig. 13 is a fluid pressure circuit diagram of the antilock brake system provided with the brake fluid pressure control apparatus according to the second embodiment
Fig. 14 is a schematic view showing a general antilock brake system;
Fig. 15 is a longitudinal sectional view of the first conventional brake fluid control apparatus;
Fig.16 is a longitudinal sectional view of the second conventional brake fluid control apparatus;
Fig. 17A is a lateral sectional view of the third prior brake fluid control apparatus;
Fig. 17B is a sectional view taken along the line B-B of Fig. 17A.

### DETAILED DESCRIPTION OF THE PREFERRED EMBODIMENTS

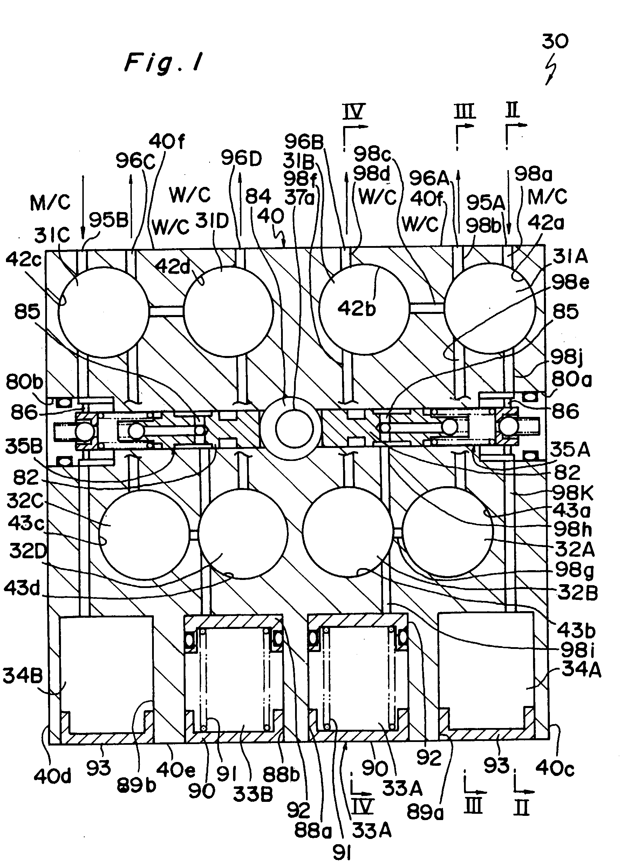

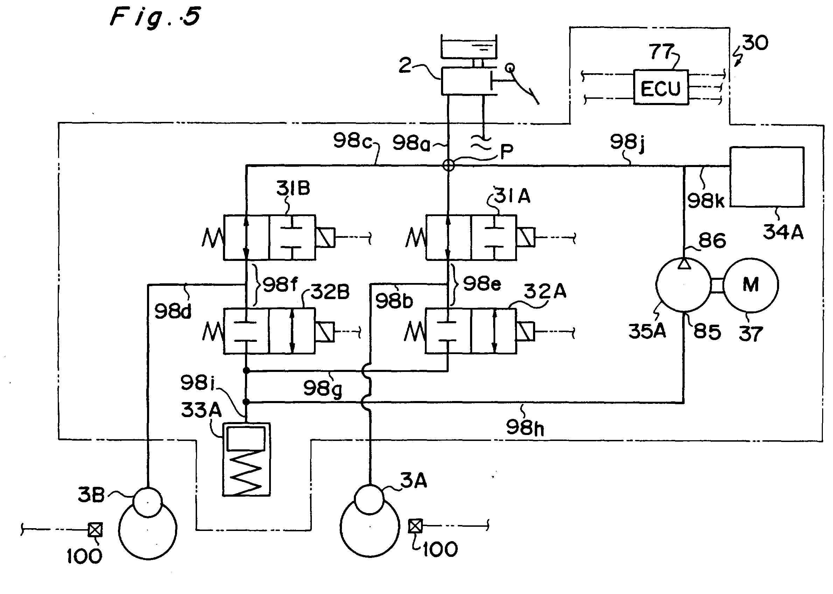

Figs 1 through 4 show a brake fluid pressure control apparatus 30 according to the first embodiment of the invention. Fig. 5 schematically shows an antilock brake system provided with the brake fluid pressure control apparatus 30.

The brake fluid pressure control apparatus 30 has a housing block 40 provided with inlet valves 31A through 31D, discharge valves 32A through 32D, reservoirs 33A and 33B, silencers 34A and 34B, plunger pumps 35A and 35B, and an electric motor 37.

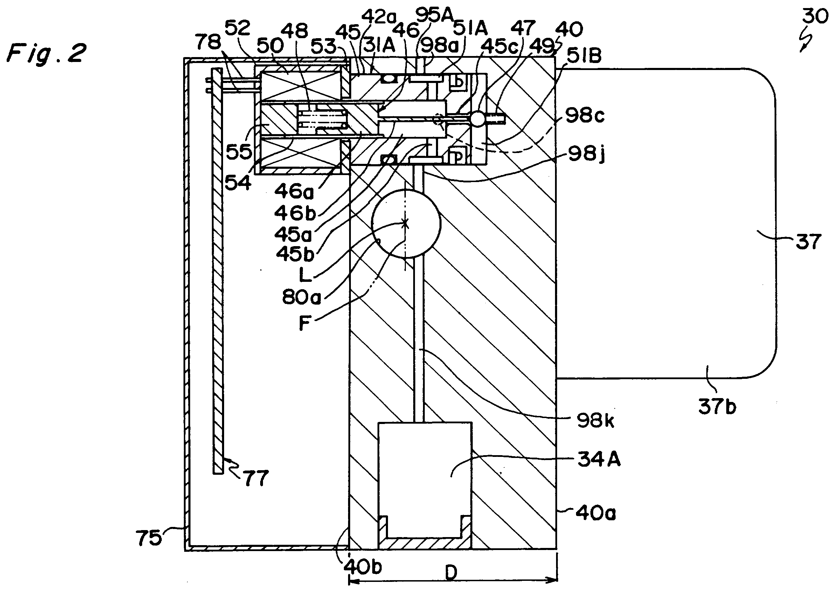

A first side face 40a of the housing bloke 40, which is on the right side in Figs. 2 through 4, is formed with a motor receiving bore not shown. The front end side of the electric motor 37 is inserted into the motor receiving bore. A rear side case 37b of the electric motor 37 is projecting from the first side face 40a of the housing block 40.

A second side face 40b of the housing block 40, which is on the left side in Figs 2 through 4, is formed with four valve receiving bores 42a through 42d in which the inlet valves 31A through 31B are accommodated. These four valve receiving bores 42a through 42d are arranged horizontally in line. Lower to the valve receiving bores 42a through 42d in the figures, the second side face 40b is formed with four valve receiving bores 43a through 43d in which the inlet valves 31A through 31B are accommodated. These four valve receiving bores 43a through 43d are arranged horizontally in line.

The inlet valves 31A through 31D are normally open on/off type electromagnetic valves. As shown in Figs. 2 through 4, these inlet valves 31A through 31D are provided with a sleeve 45, a movable member 47, a valve body 47, springs 48 and 49, and a coil 50.

The sleeve 45 is press fitted into the valve receiving bores 42a through 42d. The side surface of the sleeve 45 is depressed in ring configuration so as to form a first fluid chamber 45b. The first fluid chamber 45b is communicated with the inner portion 45a of the sleeve 45 by a fluid passage 45b. Between the tip end of the sleeve 45 and the bottom of valve receiving bores 42a through 42d, a space are made, thereby forming a second fluid chamber 51B. The tip end of the sleeve 45 is formed with a fluid passage 45c which communicates the second fluid chamber 51B with the inner portion 45a of the sleeve 45.

The movable core 46 slidably accommodated in the inner portion 45a of the sleeve 45 is provided with a movable core portion 46a and a shaft portion 46b projecting from the movable core portion 46a. The shaft portion 46b is loosely inserted into the second fluid chamber 51B. A spherical valve body 47 urged by the spring 49 abuts against the tip end of the shaft portion 46b.

The coil 50 is accommodated with a coil case 52 arranged out of the housing block 40. A numeral 53 denotes a cap and a numeral 54 denotes a guide ring.

The spring 48 is compressed between the movable core portion 46a of the movable member 46 and a stationary core 55 fixed to the guide ring 54 to close the opening end thereof.

At a time of deenergization of the coil 50, the movable core 46 is urged to the left side in the figures by the urging force of the spring 46, so that the valve body 47 is released from a valve seat formed in a portion where the fluid passage 45c is connected to the second fluid chamber 51B. Thus, in this condition, the first fluid chamber 51A and the second fluid chamber 51B are connected with each other. On the other hand, at a time of energization of the coil 50, the movable core porion 46a of the movable member 46 is attracted to the left side in figures by magnetic field generated by the coil 50. This results in that the movable member 46 is moved to the left side against the urging force of the spring 48, so that the valve body 47 is seated on the valve seat by the urging forth of the spring 49. Thus, in this condition, the first and second fluid chambers are cutted off with each other.

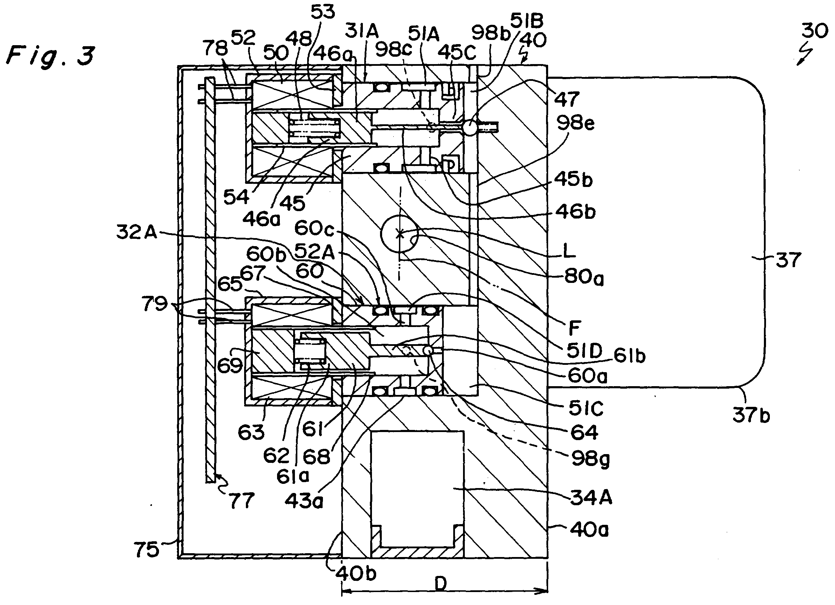

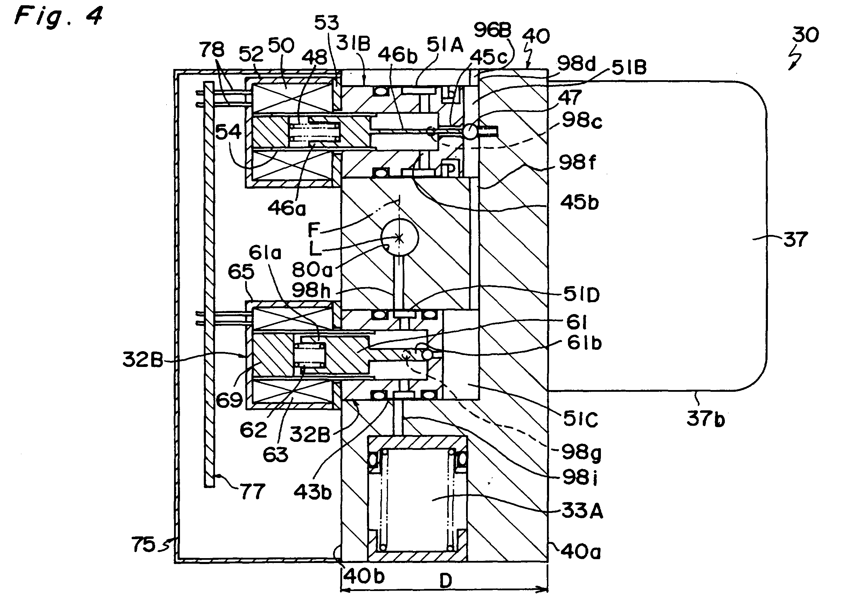

The discharge valves 32A through 32D are normally closed on/off type valves. As shown in Figs. 3 and 4, each discharge valve 31A through 31D is provided with a sleeve 60, a movable member 61, a spring 62 and a coil 63.

The sleeves 60 are press fitted into the valve receiving bores 43a through 43d. The tip end porion of the sleeve 60 is formed with a third fluid chamber 51C which can be connected to an inner portion 60b of the sleeve 60 through a fluid passage 60a. The side surface of the sleeve 60 is depressed in ring configuration so as to form a forth fluid chamber 51D connected to the inner porion 60b through a fluid passage 60c.

The movable core 61 slidably accommodated in the inner portion 60b of the sleeve 60 is provided with a movable core portion 61a and shaft portion 61b projecting from the movable core portion 61a. A spherical valve body 64 is fixed to the tip end of the shaft porion 61b. The coil 63 is accommodated in the coil case 56 arranged out of the housing block 40. A numeral 67 denotes a cap and a numeral 58 denotes a guide ring.

The spring 62 is compressed between the movable core portion 61a of the movable member 61 and a stationary core 69 fixed to the guide ring 68 to close the opening end thereof.

At a time of deenergization of the coil 63, the movable member 61 is urged to the right side in the figures by the urging force of the spring 62, so that the valve body 64 is seated on a valve seat formed in a portion where the fluid passage 60a is connected to the inner portion 60b of the sleeve 60. Thus, in this condition, the third fluid chamber 51C and the fourth fluid chamber 51D are cut off with each other. On the other hand, at a time of energization of the coil 63, the movable core porion 61a of the movable member 61 is attracted to the left side in the figures by magnetic field generated by the coil 63. This results in that the movable member 61 is moved to the left side against the urging force of the spring 62, so that the valve body 64 is released from the valve seat. Thus, in this condition, the first and second fluid chambers are communicated with each other.

In the discharge valves 32A through 32D, the fluid pressure is inputted from one end side of them and discharged in orthogonal direction to the axis of the sleeve 60.

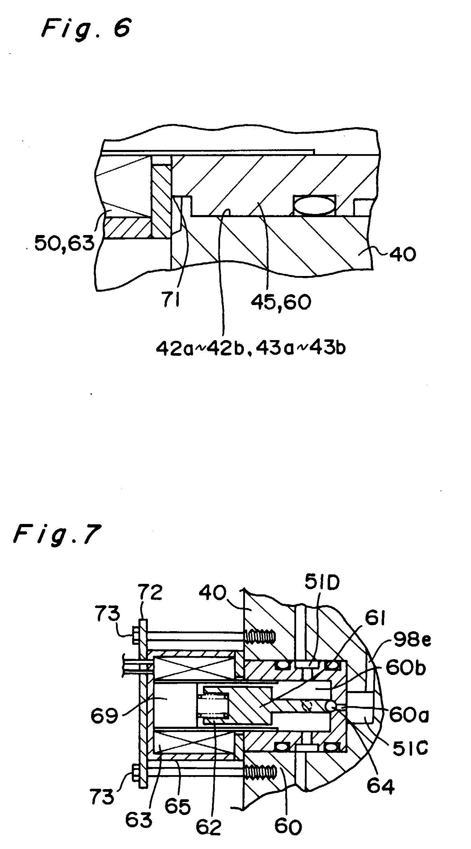

The inlet valves 31A through 31D and the discharge valves 32A through 32B can be mounted to the housing block 40 by not only press fitting but also other methods. For example, a step portion 71 is formed in the end faces of the sleeves 45 and 60. Opening edges of the valve receiving bores 42a through 42d and 43a through 43d formed in the housing block 40 are pressed so that the sleeves 45 and 60 are engaged with the housing block 40 by the pressed portion. Further, as shown in fig. 7, a pressure plate 72 arranged against the rear end face of the coil case 65 can be fixed to the housing block 40 by bolts 73.

A cover 75 is attached to the second side face 40b of the housing block 40. The inlet valves 31A through 31D and discharge valves 32A through 32D each projecting from the housing block 40 are accommodated inside the cover 75. Further, an electronic control substrate 77 on which various electronic parts such as micro computers not shown are packaged is accommodated inside the cover 75. Terminals 78 and 79 for electric supply to the inlet valves 31A through 31B and discharge valves 32A through 32D are connected to the electronic control substrate 77. Signals from various sensors such as a wheel speed sensor 100 shown in Fig. 5 are inputted to the electronic control substrate 77. The electronic control substrate 77 outputs driving signals to the inlet valves 31A through 31D and the outlet valves 32A through 32D, and the electric motor 37 and so on according to the inputted signals.

As described above, in the first embodiment, the size of the brake fluid pressure control apparatus can be decreased since the electronic substrate 77 is provided at the other side of the inlet valves 31A through 31D and the discharge valves 32A through 32D.

As shown in Fig. 1, on right and left side faces of the housing block 40, pump receiving bores 80a and 80b are formed in orthogonal to the valve receiving bores 42a through 42d and 43a through 43d. Plunger pumps 35A and 35B are accommodated in each pump receiving bore 80a and 80b. These pump receiving bores 80a and 80b are formed at a center positions between the upper valve receiving bores 42a through 42d and the lower valve receiving bores 43a through 43d in the figures. Further, the pump receiving bores 80a and 80b are opposing to each other in horizontal direction across the motor shaft 37a of the electric motor 37.

Each plunger pump 35A and 35B has a plunger 82 which abuts on an eccentric cam 84 fixed to the rotation shaft 37a of the electric motor 37. Actuating the electric motor 37, the plunger 82 is reciprocated so that the working fluid is pumped up from the inhalation opening 85 and discharged out of the discharged opening 86. Since the plunger pumps 35A and 35B have conventional constitution, detail description is omitted.

A bottom portion 40e of the housing block 40 is formed with fluid chamber bores 88a, 88b, 89a and 89b. As shown in Fig. 1, each two fluid chamber 88a and 88b is closed by a plug 90 at the opening edge and slidably accommodates a piston 92 so as to constitute reservoirs 33A and 33B. Each fluid chamber bores 89a and 89b at right and left sides is closed by a plug 93 to constitute silencers 34A and 34B.

An upper face 40f of the housing block 40 is formed with two inlets 95A and 95B each connected to the master cylinder 2 and four outlets 96A through 96D each connected to a different wheel cylinders 3.

Since the inlets 95A and 95B and outlets 96A through 96D are formed on the same surface of the housing block 40, space for arranging passages to communicate them with the master cylinder 2 and the wheel cylinder 3 can be decreased.

The housing block 40 is formed with passages to communicate the inlets 95A and 95B with the outlets 96A through 96D via inlet valves 31A through 31D, discharge valves 32A through 32D, reservoirs 33A and 33B, silencers 34A and 34B and plunger pumps 35A and 35B.

These passages are formed symmetrically. On the right side of Fig. 1, passages of a first system for communicating one inlet 95A with two outlets 96A and 96B. In these passages, two inlet valves 31A and 31B, two discharge valves 32A and 32B, the plunger pump 35A, the reservoir 33A and the silencer 34A. Similarly, on the left side of Fig. 1, passage of a second system for communicating one inlet 95B with two outlets 96C and 96D. The first passage system will be described herebelow. In Fig. 5, only the first passage system is shown.

As shown in Figs. 1 and 2, a passage 98a for communicating the inlet 95A with the first fluid chamber 51 of the inlet valve 31A is formed in vertical direction. Further, as shown in Figs. 1 and 3, a passage 98b for communicating the second fluid chamber 51A of the inlet valve 31A with the outlet 96A is formed in vertical direction. These passages 98a and 98b form a main passage for communicating the master cylinder 2 with the wheel cylinder 3A.

As shown in Figs. 1 through 3, a passage 98c for communicating the first fluid chamber 51A of the inlet valve 31A with the first fluid chamber 51A of the inlet valve 31B is formed in horizontal direction. Further, as shown in Figs. 1 and 4, a passage 98d for communicating the inlet valve 31B with the outlet 96B is formed in vertical direction. These passages 98c and 98d cooperate with the fluid passage 98a to constitute the main passage for communicating the master cylinder 2 with the wheel cylinder 3B.

As shown in Figs. 1 and 3, a fluid passage 98e for communicating the second fluid chamber 51B of the inlet valve 31A with the third fluid chamber 51C of the discharge valve 31B is formed in horizontal direction. Similarly, as shown in figs. 1 and 4, a passage 98f for communicating the second fluid chamber 51B of the inlet valve 31B with the third chamber 51C of the discharge valve 32B is formed in vertical directon. These passages 98e and 98f communicate the inlet valves 31A and 31B with the discharge valves 32A and 32B. Further, these passages 98e and 98f are connected to the wheel cylinder side.

As shown in Figs. 1, 3 and 4, a passage 98g for communicating the fourth fluid chamber 51D of the discharge valve 32A with the forth fluid chamber 51D of the discharge valve 32B is formed in horizontal direction.

As shown in Figs. 1 and 4, a passage 98h for communicating the forth fluid chamber 51D of the discharge valve 32A with the inhalation opening 85 of the plunger pump 35A is formed in vertical direction.

These passages 98g and 98h constitute a part of the return path which communicates the discharge valves 32A and 32B with the inhalation opening 85 of the plunger pump 35A.

As shown in Figs. 1 and 4, a passage 98i for communicating the forth fluid chamber 51D of the discharge valve 32 with reservoir 33A is formed. This passage 98i constitutes a part of the return passage where the passage branches to the reservoir 33A.

As shown in Figs. 1 and 2, a passage 98j for communicating the discharge opening 86 of the plunger pump 35A with the first fluid chamber 51A of the inlet valve 31A in vertical direction. This passage 98j constitutes a part of the return path which communicates the discharge opening 86 of the plunger pump 35A with a return point "P" to the main passage shown in Fig. 5 .

Furthermore, as shown in Figs. 1 and 2, a passage 98k for communicating the silencer 34A with the discharge opening 86 of the plunger pump 35A is formed in vertical direction. This passage 98k constitutes a part of the return path which branches to the silencer 34A.

In the brake fluid pressure control apparatus 30, among the passages 98a through 98k, the passages 98e and 98f communicating the second fluid chamber 51B of the inlet valves 31A and 31B with the third fluid chamber 51C of the discharge valves 32A and 32B are characteristic. Namely, as shown in Figs. 3 and 4, these passages 98e and 98f are straight passages elongating in vertical direction and formed between the standard plane containing the axis of the plunger pump 35A and parallel to the first side face 40a and the first side face 40a. In such constitution, the plunger pump 35A is arranged between the second face 40b and the one ends of the inlet valves 31A through 31D and the discharge valves 32A through 32D. This causes that the distance from one ends of the inlet valves 31A through 31D and the discharge valves 32A through 32D to the first face 40 can be set at minimum value so as to maintain strength. Thus, the width "D" of the housing block 40 can be decreased due to such construction,

Since the second system of the passages formed on the left side of the housing block 40 in Fig. 1 is symmetrical to the first system of the passages, detail description thereof is omitted.

The brake fluid control apparatus of the first embodiment is actuated as explained herebelow by driving the inlet valves 31A and 31B, the discharge valves 32A through 32D and the electric motor 37 on the basis of the driving signal outputted by the electronic control substrate 77.

At a time of unantilock control and at a time of pressurizing of antilock control, the inlet valves 31A and 31B are opened and the discharge valves 32A and 32B are closed. The working fluid from the master cylinder 2 is supplied to the wheel cylinder 3A through the passages 98a and 98b. Then, the working fluid from the master cylinder fluid is supplied to the wheel cylinder 3B through the passages 98a, 98c and 98d. At a time of depressurizing of antilock control, the inlet valves 31A and 31B are opened and the discharge valves 32A and 32B are opened. The working fluid in the wheel cylinder 3A is discharged to the reservoir 33A through the passages 98b, 98e, 98g and 98i. Then, the working fluid in the wheel cylinder 3B is discharged to the reservoir 33A through the passages 98d, 98f and 98i. The plunger pump 35A is activated by the electric motor 37, so that the working fluid accumulated in the reservoir 33A is returned to the master cylinder 2 through the passages 98i and 98h and the return point "P". Further, at a time of pressure holding of antilock control, the inlet valves 31A and 31B, and discharge valves 32A and 32B are closed.

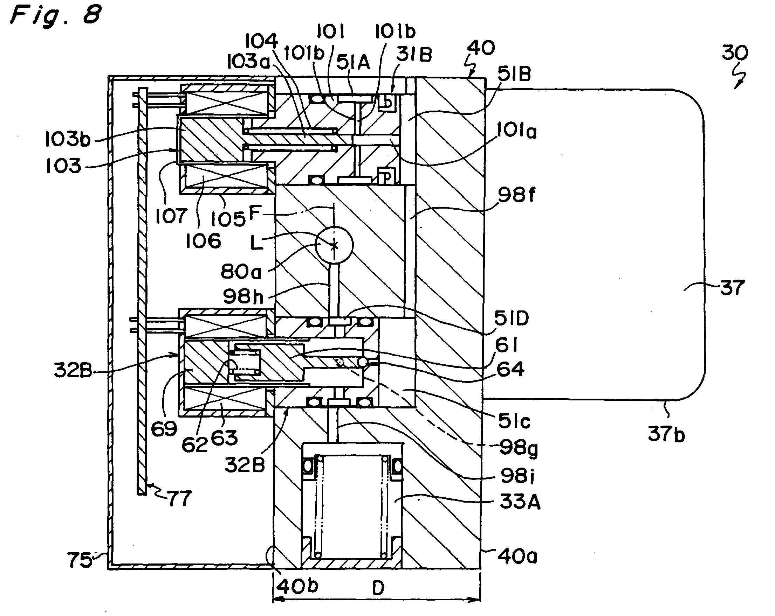

Fig. 8 shows a modification of the first embodiment.

In this modification, constitution of the normally open inlet valves 31A through 31D is different from that of inlet valves of the first embodiment. These inlet valves 31A through 31D are each provided with a fluid passage 101a elongating in the axis direction thereof. The fluid passage 101a is communicated with the first fluid chamber 51A through a fluid passage 101b connected to the fluid passage 101a at a right angle. Further, the shaft portion 103a of the movable member 103 is accommodated in the fluid passage 101a from the side opposite to the second fluid chamber 51B so as to be slidable in liquid-tight state. A spring 104 is compressed between the movable core porion 103b of the movable core 103 and the sleeve 101.

At a time of deenergization to the coil 106 in the coil case 105, the movable core 103 of each discharge valve 31A and 31B is urged to the left in the figures by the urging force of the spring 104 so as to be engaged with the bottom of the guide ring 107. In this condition, since the tip end of the shaft portion 103a of the movable core 103 is situated on the left side in figures to the confluence point of the passages 101a and 101b, the first fluid passage 51A and the second fluid passage 51B are communicated with each other. On the other hand, at a time of energization of the coil 106, the movable member 103 is moved to the right in figures by the electromagnetic force. Consequently, the opening of the fluid passage 101b to the fluid passage 101a is closed by the outer surface of the shaft portion 103a, so that the first fluid chamber 51A and the second fluid chamber 51B are cutted off with each other.

Another constitutions and operations of the modification are similar to those of the above described first embodiment.

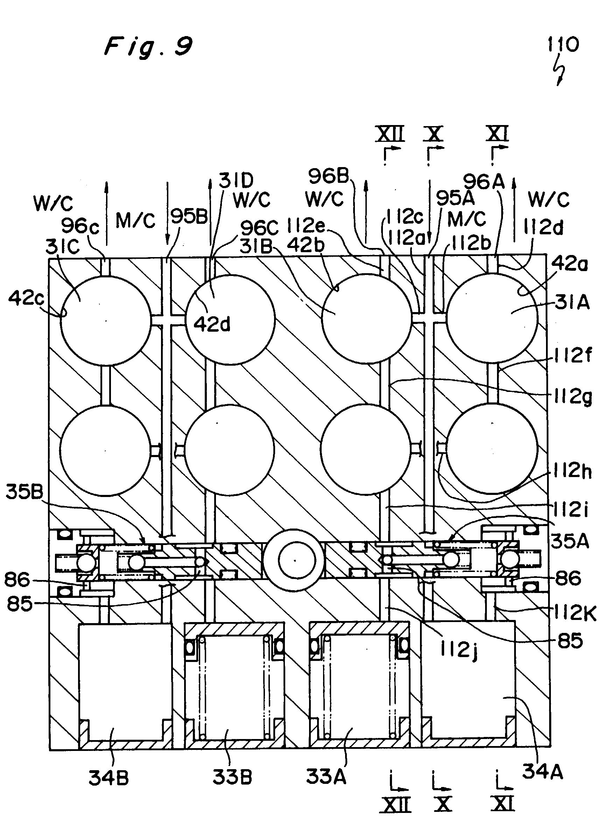

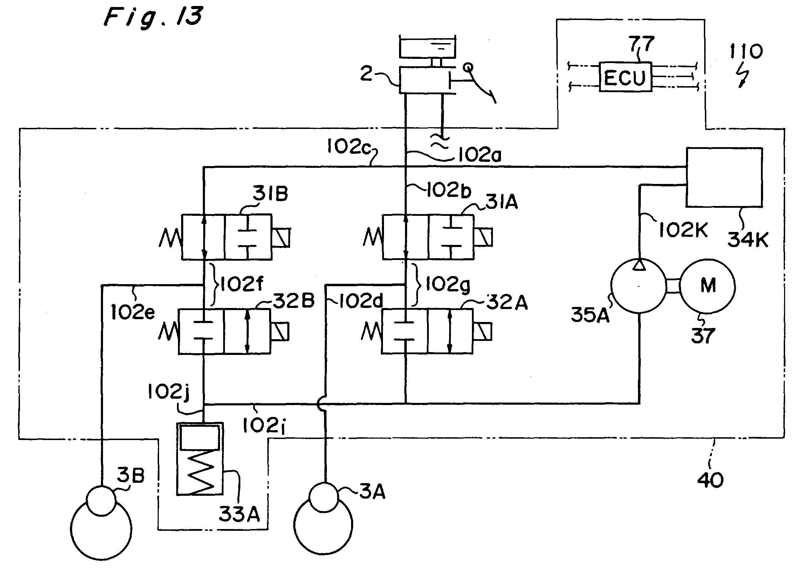

Figs. 9 through 12 show the second embodiment of the present invention. Fig. 13 shows an antilock brake system provided with the brake fluid pressure control apparatus of the second embodiment.

The brake fluid control apparatus of the second embodiment is different from the first embodiment in that the pump accommodation bores 80a and 80b for accommodating the plunger pumps 35A and 35B are formed lower than the lower valve accommodation bores 43a through 43d as shown in Fig. 9. Further, the constitution of passages 112a through 112j is different from that of the first embodiment.

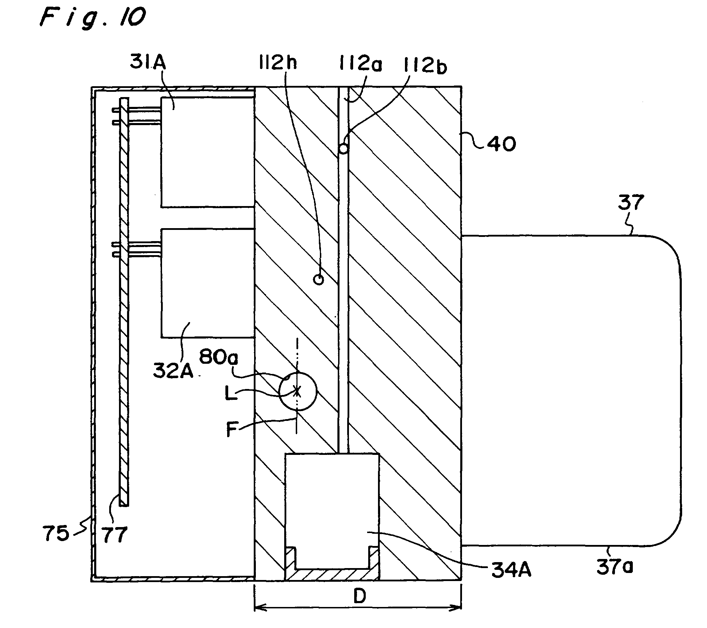

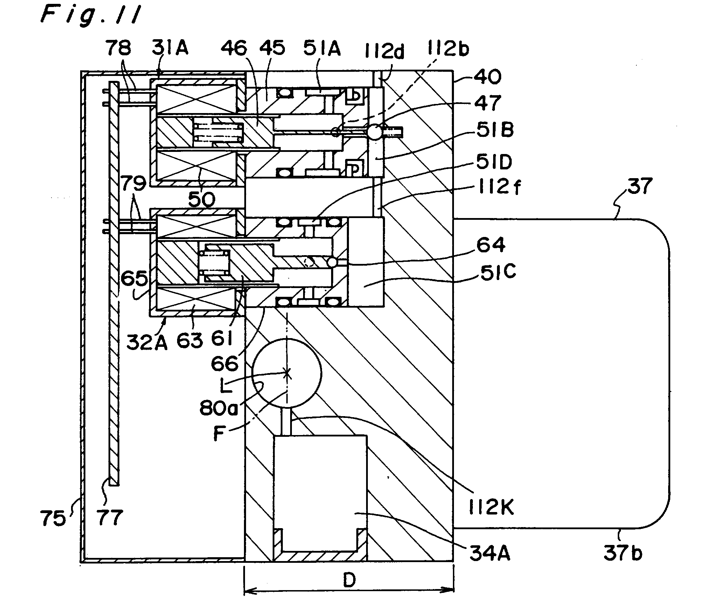

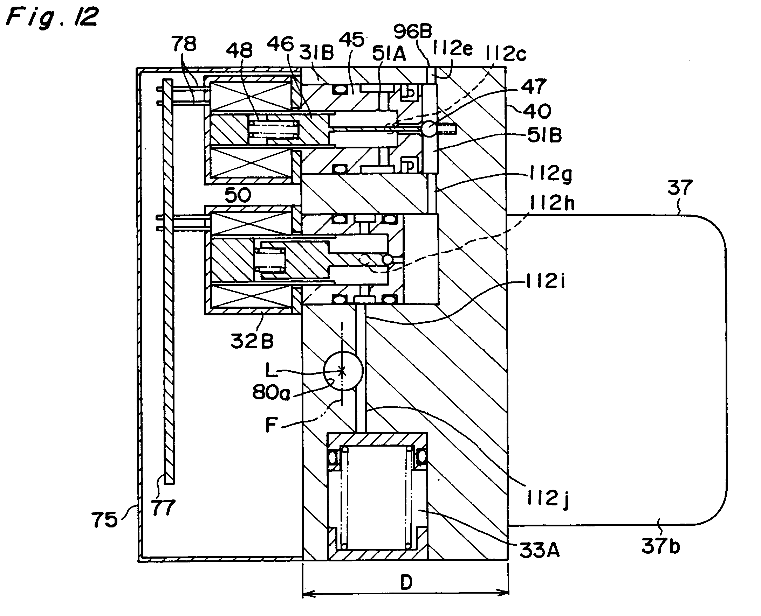

As shown in Figs. 9 and 10, the housing block 40 is formed with the passage 112a communicating the silencer 34A with the inlet 95A in vertical direction. Further, as shown in Figs. 9 and 12, the passages 112b and 112c communicating the passage 112a with the first fluid chambers 51A and 51B of the discharge valves 31A and 31B are formed in horizontal direction. Furthermore, as shown in Figs. 9 and 11, the passage 112d communicating the second fluid passage 51B of the discharge valve 31A with the outlet 96A is formed. Similarly, as shown in Figs. 9 and 12, the passage 112e communicating the second fluid chamber 51B of the inlet valve 31B with outlet 96B is formed. These passages 112a through 112e constitute a main passage communicating the master cylinder 2 with the wheel cylinder 3.

As shown in Figs. 9 and 11, the passage 112f communicating the second fluid chamber 51B of the inlet valve 31A with the third fluid chamber 51C of the discharge valve 32A is formed in vertical direction. Similarly, as shown in Figs. 9 and 12, the passage 112g communicating the discharge valves 32A and 32B with the fourth fluid chamber 51D is formed in horizontal direction. Further, as shown in Figs. 9 and 12, a passage 112i communicating the fourth fluid chamber 51D of the discharge valve 32B with inhalation opening 85 of the plunger pump 35A is formed in vertical direction. These passages 112f through 112i constitute a part of the return passage communicating the wheel cylinders 3A and 3B with the inhalation opening 85 of the plunger pump 35A.

As shown in Figs. 9 and 12, a passage 112j communicating the inhalation opening 85 of the plunger pump 81A with the reservoir 33A is formed in vertical direction. This passage 112j constitutes a part of the return passage branching to the reservoir 33A.

As shown in Figs. 9 and 11, a passage 112k communicating the discharge opening 86 of the plunger pump 35A with the silencer 34A is formed in vertical direction. The return path is constituted by the passage 112k and the passage 112a returning from the silencer 34A to the master cylinder 2.

In this brake fluid pressure control apparatus 30 of the second embodiment, among the passages 112a through 112k, the passages 112f and 112g communicating the second fluid chambers 51B of the inlet valves 31A and 31B with the third passages 51C of the discharge valves 32A and 32B are formed between the standard plane "F" the first side face 40a as same as the first embodiment. Owing to such constitution, the width "D" in front end rear is decreased.

In the second embodiment, the passage 112a communicating the inlet 95A connected to the master cylinder 2 with the silencer 34A is formed between the standard plane "F" and the first side face 40 as same as the passages 112f and 112g. As described above, in the second embodiment, all passages elongating in vertical direction in figures except the passage 112k communicating the reservoir 33A with the plunger pump 35A shown in Fig. 11, are formed between the standard plane "F" the first side face 40a. Thus, in the brake fluid pressure control apparatus 110 of the second embodiment, the width "D" in front end rear is further decreased.

Another constitutions and operations of the second embodiment are similar to those of the above described first embodiment. Thus, same members are given same symbols and detail description is omitted.

In the second embodiment, the silencer 34A can be omitted so that the discharge opening 86 of the plunger pump 35A is directly communicated with a passage connected to the inlet 95A.

Although the present invention has fully described in connection with the preferred embodiments thereof with reference to the accompanying drawing, it is to be noted that various changes and modifications are apparent to those skilled in the art. Such changes and modifications are to understood as included within the scope of the invention as defined by the appended claims unless they depart therefrom.

## Claims

1. A brake fluid pressure control apparatus interposed in a passage which communicates a master cylinder with wheel cylinders, the brake fluid pressure control apparatus comprising:
a main passage communicating the master cylinder with the wheel cylinder;
a normally open inlet valve actuated by electromagnetic force to communicate and cut off the main passage;
a return passage branching from the main passage at the wheel cylinder side with respect to the inlet valve and returning to the main passage at the master cylinder side with respect to the inlet valve;
a discharge valve actuated by electromagnetic force to communicate and cut off the return passage;
a plunger pump sending brake working fluid discharged from the wheel cylinder to the main passage through the return passage;
an electric motor for actuating the plunger pump; and
a housing block provided with the inlet valve, the discharge valve, the plunger pump and the electric motor and formed with the main passage and the return passage;
wherein the electric motor is provided on a first side face of the housing block,
wherein the plunger pump is arranged so as to be orthogonal to a rotation shaft of the electric motor, and so that an axis thereof is arranged on a standard plane which is parallel to the first side face,
wherein the inlet valve and the discharge valve are provided on a second side face opposite the first side face so that axes thereof are parallel to the rotation shaft of the electric motor, and
wherein passages which constitute a part of the main passage communicating the inlet valve with the discharge valve and connected to the wheel cylinder are arranged between the first side face side and the standard plane.

2. The brake fluid pressure control apparatus of claim 1, wherein a silencer interposed in the return passage and reducing pulsation of the working fluid discharged from the plunger pump is provided in the housing block, and
wherein a passage which communicates the silencer with the main passage at the master cylinder side with respect to the inlet valve is arranged between the first side face side and the standard plane.

3. The brake fluid pressure control apparatus of claim 1, further comprising an electronic control substrate having a micro computer and outputting drive signals to the inlet valve, the discharge valve and the electric motor,
wherein one ends of the inlet valve and the discharge valve are arranged inside the housing block and the other ends of them are projecting from the second side face of the housing block, and
wherein the electronic control substrate is provided on the side of the other ends of the inlet valve and the discharge valve.

4. The brake fluid pressure control apparatus of claim 2, further comprising an electronic control substrate having a micro computer and outputting drive signals to the inlet valve, the discharge valve and the electric motor,
wherein one ends of the inlet valve and the discharge valve are arranged in the housing block and the other ends of them are projecting from the second side face of the housing block, and
wherein the electronic control substrate is provided on the side of the other ends of the inlet valve and the discharge valve.

5. The brake fluid pressure control apparatus of claim 1, wherein the one end of the inlet valve is inserted into a valve accommodate bore formed on the second face, and
wherein master cylinder pressure introduced into the inlet valve in orthogonal direction to the axis thereof is discharged from the one end thereof to the wheel cylinder.

6. The brake fluid pressure control apparatus of claim 2, wherein the one end of the inlet valve is inserted into a valve accommodate bore formed on the second face, and
wherein master cylinder pressure introduced into the inlet valve in orthogonal direction to the axis thereof is discharged from the one end thereof to the wheel cylinder.

7. The brake fluid pressure control apparatus of claim 3, wherein the one end of the inlet valve is inserted into a valve accommodate bore formed on the second face, and
wherein master cylinder pressure introduced into the inlet valve in orthogonal direction to the axis thereof is discharged from the one end thereof to the wheel cylinder.

8. The brake fluid pressure control apparatus of claim 1, wherein the one end of the discharge valve is inserted into a valve accommodate bore formed on the second side face, and
wherein master cylinder pressure introduced into the inlet valve at the one end thereof is discharged to the return passage in orthogonal direction to the axis thereof.

9. The brake fluid pressure control apparatus of claim 2, wherein the one end of the discharge valve is inserted into a valve accommodate bore formed on the second side face, and
wherein master cylinder pressure introduced into the inlet valve at the one end thereof is discharged to the return passage in orthogonal direction to the axis thereof.

10. The brake fluid pressure control apparatus of claim 3, wherein the one end of the discharge valve is inserted into a valve accommodate bore formed on the second side face, and
wherein master cylinder pressure introduced into the inlet valve at the one end thereof is discharged to the return passage in orthogonal direction to the axis thereof.
